# EUROPEAN PATENT SPECIFICATION

(11) **EP 1 352 024 B1**
(45) Date of publication and mention of the grant of the patent: **22.10.2008**
(21) Application number: 01271413.5
(22) Date of filing: 12.12.2001
(51) Int. Cl.: C08J 11/16, C08J 11/06

(54) **A PROCESS OF DE-LAMINATION OF MULTI-LAYER LAMINATED PACKAGING INDUSTRIAL REFUSE**
VERFAHREN ZUR DELAMINIERUNG VON MEHRSCHICHTIGEM LAMINIERTEM INDUSTRIEVERPACKUNGSABFALL
LAMINATION DE DECHETS INDUSTRIELS FAITS DE PRODUITS D'EMBALLAGE LAMINES MULTICOUCHE

(30) Priority: 18.12.2000 IN CA069000
(43) Date of publication of application: 15.10.2003
(73) Proprietor: Mukhopadhyay, Ashutosh, Calcutta 700 053, State of West Bengal (IN)
(72) Inventor: Mukhopadhyay, Ashutosh, Calcutta 700 053, State of West Bengal (IN)
(74) Representative: Colas, Jean-Pierre
(86) International application number: PCT/IN2001/000218
(87) International publication number: WO 2002/050175

(56) References cited:
- US-A- 5 889 063

## Description

### FIEELD OF INVENTION

The present invention relates to a process for recovery of useful constituents from multi layered laminated fragments of packaging industrial refuse. More particularly the invention relates to a process for recovery of useful constituents from multilayered laminated fragments of polyethylene plastics and aluminium foils either in one side or in both sides, from each other or one another, as separate constituents.

### BACKGROUND OF THE INVENTION

To meet the respective specific and particular packaging demands use of lamination of plastics with aluminium is an widely accepted practice in packaging industries.

Such packagings laminate aluminium foils with plastics either in one side or in both sides. In toileteries a particular tubes of such lamination is widely used. In medicinal strips or blister-type packs such lamination is widely used. In cable industry, to protect cable from surrounding adversity, a protective wrap-type packaging of such lamination is widely used. Also, the use of such laminated pouches to pack beverages and processed foods are widely desperate.

Now the entire process, to reach a final stage of packaging, en route, generate a huge volume of refuse in almost every chain of the production process.

Such mass may be called, in short, as multi-layer laminated packaging industrial refuse where the chief components are thin foils of aluminiun and plastics.

In any convenient way these are non-recyclable and vulnerable for destroying, despite their characteristic commercial valuations.

A planned so-called eco-friendly project of incineration or landfill treatments are real costly affairs as well as burden to economy, even to productions of developed countries also. In India, almost about in coarse average, around sixty-three million rupees (around US $ 1.4 mn) per year, or say, around one hundred seventy five thousand rupees (around US $ 3900) per day can be saved by the recovery of such packaging industrial laminated refuse.

The colossal mass of domestic refuse, where the used such whole packagings are thrown away as garbage, is enough tall to undercount. In India almost about in coarse average around one thousand five hundred million rupees (around US $ 33 mn) per year, or say, around rupees four million (around US $ 90,000) per day can be saved form recovery of such domestic post-use packaging industrial laminated refuse, if and when recovery is possible.

The global impact is a just matter of simple reckonings.

Here delamination and its subsequent proper recycle / reprocess / reuse will nurture and strengthen the main stream of economy more, as well as will save the ecology from notorious pollution also. Since such refuse is out and out a waste, whatsoever stubborn it is its process of recovery should be economical. A higher recovery process may dearer the cost of recovered material than the virgin and may subsequently overcast the intention.

An object of the present invention is to provide a process for recovery of constituents of laminated multi-layer fragments of packaging industrial refuse, scraps, waste etc.

A further object of the present invention is to provide a process for the recovery of laminate constituents that is economical and eco friendly.

A still further object of the invention is to provide a process for the recovery of laminate constituents in which only inorganic compounds are used.

Patent Nos. DE 4122705, WO 9304116, EP 599905 have specific relevance to the delamination of laminated packaging industrial refuse uses acetone - water as organic chemical solvents. Acetone water is comparatively dearer than nitric acid, used herein.

Acetone has a very low flash point and it is highly flammable and accident - prone. The plastics are also fairly flammable. In industrial application, where huge volume of acetone will require, its affinity to accident is unpredictably dangerous.

US Patent No. 5,246,116 relates to the delamination of laminated packaging industrial refuse has used poly alkaline glycol polymer solution as solvent.

US Patent No. 5,421,526 teaches the use of volatile organic acids like formic acid, acetic acid, propanoic acid and butyric acid as solvents.

The aforesaid prior art uses organic chemical solvents only, such as, acetone - water Poly alkylene glycol polymer solution and volatile organic acids like formic acid, acetic acid, propanoic acid and butyric acid and does not teach the use of inorganic chemical compounds.

US Patents 5246116 and 5421526 further makes use of heat at temperatures of 80°C and 50°C respectively. Here the material is extremely lighter in weight, and is accordingly voluminous. In one 200 lit. reactor with 190 lit. solvent, at one time, a maximum 15 kgs. shredded material can be processed. To process ten metric ton in a day it demands a series of big reactors and subsequent huge volume of solvents. Application of heat to such a big mass is obviously a costly affair.US 5889063 teaches a process for conversion of scrap tyres to rubber pieces by separating the steel belts and inorganic materials from said pieces by nitric acid of concentration above 60% and finally using nitric acid of the same concentration to convert the rubber tyre pieces into rubber particles. In this art the steel belts are connected to the rubber by a copper sulphur bond by forming a complex which is acted upon by acid for about 4 days. The applicant has found that delamination of laminated constituents can be economically effected by treating the material with nitric acid at ambient temperature to dissolve the binder adhesive . The use of nitric acid results in substantial economy because the organic compounds used in prior art are relatively more expensive. The present invention does not use any organic chemical compounds but is solely related with inorganic compounds and dissolve binder adhesive and thus differ from all the prior arts conradistinctively.

### SUMMARY OF INVENTION

Thus the present invention relates to a process for the recovery of useful constituents from multi layered laminated fragments comprising plastics and aluminium foils of packaging industrial refuse by separating them as individual constituents, the process comprising contacting the fragments with a nitric acid solution for a period of between 4-7 hours so as to dissolve the adhesive binding the constituents, separating the constituents from each other and washing the same.

### DESCRIPTION OF PREFERRED EMBODIMENT

According to the invention, multilayer laminated packaging industrial refuse laminated with plastic and thin foils of aluminium, either in one side or in both the sides are used for delamination. The entire refuse may appear either in sheet forms, strips form, tube form or sometimes in already shredded form.

Through conventional shredder un-shredded forms are shredded breadthwisely at an average 0.25 cm-1 cm, irrespective of length, but preferably not more than one metre. The comminuted refuse fragments are dipped in inorganic solvent, 50%-70% conc. nitric acid at ambient temperature condition. Preferably the concentration is 65% having density around 1.400. The mass is allowed to stand quietly under supervision for about 4 to 7 hours, till the de-lamination is complete.

At ambient temperature 50% - 70% conc. nitric acid does neither dissolve aluminium foils nor plastics but dissolves binder adhesive from lamination. In a complete de-lamination the aluminium foils get fully separated from plastics and all laminated constituents remain in a floating/submerged condition according to their own specific gravity.

The delaminated constituents are removed from the nitric acid and allowed to undergo a series of baths. First, a fast bath is effected with dilute calcium hydroxide solution (lime water) which follows by other one or more of water baths.

Due to individual specific gravity of the materials, the de-laminated constituents individually either float or submergedly settle in water, and are separated and sorted out as plastic and aluminium respectively. Fragments of separated aluminium foils and fragments of separated plastics are centrifuged to dryness separately as far as possible. Then they are allowed a sun bath for total drying.

The separated fragments of aluminium foils are ready for producing aluminium ingots, or may be sold as such. On the other hand the separated fragments of plastics are also ready for producing recycled plastic granules or may be sold as such.

The time factor varies with size of shreddings. Breadthwisely smaller fragments will take shorter time-duration. Dnesity of nitric acid affects time span also.

Sometime with blister type medicinal packaging, despite of the dissolution of binder adhesive and resultant delamination, the delaminated aluminium foils and blister polyester packs, like others, do not separate and float naturally and require physical separation.

Care should be taken in case of tubes. Tubes of 0.25 cm breadthwisely shreddings will result in better separation.

The insolubility of aluminium in nitric acid is probably caused by the formation of a protective coating of aluminium oxide on the surface of metal. Such pacification of surface of aluminium foils on nitric acid is capitalized in the process of the present invention. Both concentrated and dilute hydrochloric acid dissolves aluminium. Dilute sulfuric acid dissolve aluminum slowly and concentrated sulfuric acid dissolves aluminium rapidly. So nitric acid is used instead other inorganic acids. Atmospheric hazards of nitric acid is easily be averted by the use of proper conventional industrial scrubber which can be installed despite emergency need, as a standby, when industrial application of the invention is concerned.

Fast washing with lime dilute water neutralizes adhered nitric acid and frequent recycle of same lime water could produce calcium nitrate granules on ultimate concentration.

The main volume of nitric acid after certain undisturbed frequent use, before generating any problem, could be neutralized at a specific reactor for the purpose, to produce nitrate salt. Such, by drainage, besides neutral water, no effluent of any kind will be released to nature.

### EXAMPLES

The process of the invention will now be demonstrated with reference to two working embodiments of the process.

### EXAMPLE - 1

In a 500ml conical flask 65% nitric acid having density around 1.400 is taken.

An used laminated toiletry tube is taken. The shoulder and tail-end stitch of the tube is shredded out by manual cuttings with scissor. Then 1cm breadthwisely the tube is longitudinally shredded. All the contaminents are cleaned and washed. The 1 cm shredded fragments of the laminated tube is now dipped into the nitric acid. The flask is almost filled with nitric acid to allow a minimum air space. With a stopcock the mouth of the flask is closed. It is now allowed to stand for around 4-7 hrs. quietly.

By regular observation the de-lamination will be noticed. Within 4-5 hrs. de-lamination occurs but separation is not spontaneous. After about 5 hrs. a spontaneous separation is observed. The nitric acid is then very quietly decanted.

Dilute lime water is poured into the flask. After a fast stirring of 1-2 minutes the lime water is also decanted. Fresh water is poured and after a stirring of 3-4 minutes is decanted. Again a fresh water is poured and after a stirring of 3-4 minutes is decanted. Fresh water is poured again. It is now visible that due to higher specific gravity de-laminated aluminium foils have settled at the bottom of the flask submergedly and the de-laminated plastics are floating over the surface of water for a lesser specific gravity. De-laminated fragments are now separately taken out and dried inert.

Thus, by using nitric acid de-lamination of laminated fragments of packaging industrial refuse is possible.

### EXAMPLE - 2

190 litre 65% nitric acid having density around 1.400 is taken in a 200 litre polythene drum having a acid-base proof tap at the bottom for easy discharge of solvent. 12 ± 3 kgs. of laminated multi-layer packaging industrial refuse is taken. If the lot is unshredded then either mechanical or manual shredding is to be done breadthwisely @ of 0.25cm. -1cm. and lengthwisely @ 1 metre, if necessary.

All the contaminents will be cleaned and washed. Cleaned fragments of refuse are now dipped into the drum containing nitric acid. After firm covering the drum it is allowed to stand quietly for 4-7 hrs. In between time regular supervision is necessary which will show the onset of de-lamination and subsequent spontaneous separation.

After complete de-lamination nitric acid is taken away from the drum with the help of the tap at the bottom of the drum. 190 litre dilute lime water is poured in to the drum and is followed by fast stirring for 1-2 minutes. Lime water is taken away from the drum with the help of the tap.

190 litre Fresh water is poured in to the drum and is followed by stirring for 4-5 minutes. After that water is removed from the drum with the help of the tap. 190 litre fresh water again is poured in to the drum and is followed by stirring for 4-5 minutes. After that water is removed from the drum with the help of the tap. Sufficient water is now added for separation. A gentle stirring will help the process.

For lesser specific gravity plastics will float over water and can easily be collected separately. From the bottom aluminium foils, having greater specific gravity, can easily be collected separately. Now separated fragments of aluminium foils and plastics are centrifuged for dryings separately. Then a sun drying or drying in a dryer is also necessary for a total dryness.

Thus, by using nitric acid de-lamination of laminated fragments of packaging industrial refuse is possible in bulk volumes.

### ADVANTAGES OF THE PROCESS

The process of the present invention is carried out at ambient temperature, thus confinement of elevation of cost results processing cost highly cheaper and makes the production affordable even by cottage industry scale. The process does not involve any sophistication treatment and discharges equal attention to both delamination process as well as overall production cost. Another advantage of the process is that at a certain level, it produces a profitable product with the help of used nitric acid, making the overall process cheapest in true reality.

None of the prior arts showed any dependence on inorganic solvents and the present invention utilizes inorganic solvent to provide an absolute eco-friendly as well as socio-economic-friendly effective laminated packaging industrial waste treatment process.

This present art is the need of the moment for both ecology and economy and is also appliedly potential to provide a technically correct, economically cheapest and virtually ecofriendly delamination process of laminated multi-layer fragments of packing industrial refuse/etc.

## Claims

1. A process for the recovery of useful constituents from multi layered laminated fragments comprising plastics and aluminium foils of packaging industrial refuse by separating them as individual constituents, the process comprising contacting the fragments with a nitric acid solution for a period of between 4-7 hours so as to dissolve the adhesive binding the constituents, separating the constituents from each other and washing the same.

2. A process as claimed in claim 1, wherein the multi layer laminated packaging industrial refuse is in sheet, strip, tube or shredded form.

3. A process as claimed in claims 1 or 2, wherein any unshredded forms of the refuse are shredded using a conventional industrial shredder to a size of about 0.25 cm - 1 cm in breadth and about 0.5 - 1.5 metre in length.

4. A process as claimed in anyone of claims 1 to 3, wherein the nitric acid solution is a 50% - 70% conc. nitric acid in which the refuse is dipped.

5. A process as claimed in claim 4, wherein the nitric acid solution is a 65% nitric acid solution, having a density around 1.400.

6. A process as claimed in anyone of claims 1 to 5, wherein the step of washing is carried out with dilute lime water followed by one or more of water baths for total removal of adhered acid from the delaminated fragments.

7. A process as claimed in claim 6, wherein the de-laminated fragments are physically separated as separate constituents such as thin aluminium foils and plastics.

8. A process as claimed in claim 7, wherein the separated constituents arc subject to a step of drying.

9. A process as claimed in claim 8, wherein the drying is effected by conventional centrifuge optionally followed by drying under the sun, or in a conventional dryer.

## Patentansprüche

1. Verfahren zur Rückgewinnung von nützlichen Bestandteilen aus laminierten Mehrschichtfragmenten, die Kunststoff- und Aluminiumfolien enthalten, von Industrieverpackungsabfall durch Trennen derselben in einzelne Bestandteile mit den folgenden Schritten: Kontaktieren der Fragmente mit einer Salpetersäurelösung über eine Zeitdauer zwischen 4-7 h, um den die Bestandteile verbindenden Kleber zu lösen, Trennen der Bestandteile voneinander und Waschen derselben.

2. Verfahren nach Anspruch 1, bei dem der laminierte Mehrschicht-Industrieverpackungsabfall in Folien-, Streifen-, Rohr- oder geschredderter Form vorliegt.

3. Verfahren nach Anspruch 1 oder 2, bei dem irgendwelche nicht geschredderte Abfallformen unter Verwendung eines herkömmlichen Industrieschredders auf eine Größe von etwa 0,25 cm - 1 cm in der Breite und von etwa 0,5 m - 1 m in der Länge geschreddert werden.

4. Verfahren nach einem der Ansprüche 1-3, bei dem die Salpetersäurelösung eine 50-70%ige konzentrierte Salpetersäure ist, in die der Abfall eingetaucht wird.

5. Verfahren nach Anspruch 4, bei dem die Salpetersäurelösung eine 65%ige Salpetersäurelösung mit einer Dichte von etwa 1.400 ist.

6. Verfahren nach einem der Ansprüche 1-5, bei dem der Waschschritt mit verdünnter Kalkbrühe durchgeführt wird, wonach ein oder mehrere Wasserbäder zur totalen Entfernung von anhaftender Säure von den delaminierten Fragmenten folgen.

7. Verfahren nach Anspruch 6, bei dem die delaminierten Fragmente zum Erhalt von getrennten Bestandteilen, wie dünnen Aluminiumfolien und Kunststoff, physikalisch voneinander getrennt werden.

8. Verfahren nach Anspruch 7, bei dem die getrennten Bestandteile einem Trocknungsschritt unterzogen werden.

9. Verfahren nach Anspruch 8, bei dem das Trocknen mit Hilfe einer herkömmlichen Zentrifuge mit wahlweise nachfolgendem Trocknen unter der Sonne oder in einem herkömmlichen Trockner durchgeführt wird.

## Revendications

1. Procédé de récupération de constituants utiles à partir de fragments multicouches stratifiés comprenant des matières plastiques et des feuilles d'aluminium de déchets industriels d'emballage par séparation de ceux-ci en constituants individuels, le procédé comprenant la mise en contact des fragments avec une solution d'acide nitrique pendant une durée-comprise entre 4 et 7 heures de façon à dissoudre l'adhésif liant les constituants, la séparation des constituants les uns des autres et le lavage de ceux-ci.

2. Procédé selon la revendication 1, dans lequel le déchet industriel stratifié multicouche est sous forme d'une feuille, d'une bande, d'un tuyau ou déchiquetée.

3. Procédé selon les revendications 1 ou 2, dans lequel une quelconque forme non déchiquetée du déchet est déchiquetée à l'aide d'un déchiqueteur industriel classique jusqu'à une taille d'environ 0,25 cm à 1 cm de largeur et d'environ 0,5 à 1,5 mètre de longueur.

4. Procédé selon l'une quelconque des revendications 1 à 3, dans lequel la solution d'acide nitrique est une solution d'acide nitrique ayant une concentration de 50 % à 70 %, dans laquelle le déchet est trempé.

5. Procédé selon la revendication 4, dans lequel la solution d'acide nitrique est une solution d'acide nitrique à 65 %, ayant une densité d'environ 1,400.

6. Procédé selon l'une quelconque des revendications 1 à 5, dans lequel l'étape de lavage est réalisée avec de l'eau de chaud diluée, suivie d'un ou de plusieurs bains pour éliminer totalement l'acide adhéré provenant des fragments déstratifiés.

7. Procédé selon la revendication 6, dans lequel les fragments déstratifiés sont physiquement séparés en constituants séparés tels que les feuilles d'aluminium et les matières plastiques.

8. Procédé selon la revendication 7, dans lequel les constituants séparés sont soumis à une étape de séchage.

9. Procédé selon la revendication 8, dans lequel le séchage est réalisé avec une centrifugeuse classique, éventuellement suivi d'un séchage au soleil ou dans un sécheur classique.
